# EUROPÄISCHE PATENTSCHRIFT

(11) **EP 2 739 433 B1**
(45) Veröffentlichungstag und Bekanntmachung des Hinweises auf die Patenterteilung: **11.10.2017**
(21) Anmeldenummer: 12733724.4
(22) Anmeldetag: 11.07.2012
(51) Int. Cl.: B23K 37/04, F16B 5/08, F16B 21/08, F16B 5/06

(54) **VERBINDUNGSELEMENT**
CONNECTING ELEMENT
ELEMENT DE LIAISON

(30) Priorität: 03.08.2011 DE 102011080317
(43) Veröffentlichungstag der Anmeldung: 11.06.2014
(73) Patentinhaber: Bayerische Motoren Werke Aktiengesellschaft, 80809 München (DE)
(72) Erfinder: HERZINGER, Thomas, 80639 München (DE); WOLF, Sonja, 81675 München (DE); NIEKERK, Johann, 80993 München (DE); BERGER, Matthias, 80937 München (DE)
(86) Internationale Anmeldenummer: PCT/EP2012/063536
(87) Internationale Veröffentlichungsnummer: WO 2013/017382

(56) Entgegenhaltungen:
- DE-A1- 3 114 015
- DE-A1- 3 232 926
- DE-A1-102010 015 179
- US-A- 2 275 900
- US-A- 3 367 082
- US-A1- 2008 261 484
- US-B1- 6 463 759

## Beschreibung

Die vorliegende Erfindung betrifft ein Verbindungselement gemäß dem Oberbegriff des Patentanspruches 1.

Ein derartiges Verbindungselement ist aus der DE 10 2010 015 179 A1 bekannt. Zum technischen Hintergrund der Erfindung zählen die US 6,463,759 B1, US 2008/261 484 A1 und die DE 31 14 015 A1.

In der Großserienfertigung von Fahrzeugkarosserien müssen eine Vielzahl von Karosserieteilen mit hoher Präzision und Wiederholgenauigkeit relativ zueinander positioniert und anschließend miteinander verbunden werden, z. B. durch Verschweißen, Verschrauben, Verkleben, Verclipsen o. ä.

Aufgabe der Erfindung ist es, ein vielseitig, insbesondere im Fahrzeugkarosseriebau, einsetzbares Verbindungselement zu schaffen, mittels dessen zwei oder mehr Bauteile in einfacher, kostengünstiger Weise miteinander verbunden werden können.

Diese Aufgabe wird durch die Merkmale des Patentanspruchs 1 gelöst. Vorteilhafte Ausgestaltungen und Weiterbildungen der Erfindung sind den Unteransprüchen zu entnehmen.

Ausgangspunkt der Erfindung ist ein Verbindungselement zum Verbinden mindestens zweier Bauteile, das mindestens drei konvexe kugelige oder kugelförmige "(Verbindungs-)Abschnitte" aufweist, wobei ein erster der mindestens drei Abschnitte zur Verbindung mit einem ersten Bauteil und ein zweiter der mindestens drei Abschnitte zur Verbindung mit einem zweiten Bauteil vorgesehen ist.

Das Verbindungselement einschließlich seiner kugelförmigen Abschnitte kann z. B. aus Metall, insbesondere aus Stahl oder Aluminium oder aus Kunststoff bestehen.
Im Unterschied zu herkömmlichen Verbindungselementen, die Verbindungsabschnitte aufweisen, welche eine von einer Kugelform abweichende Form halben (z.B. Gewindebolzen o.ä.), kann ein Verbindungselement gemäß der vorliegenden Erfindung sehr einfach und kostengünstig aus massenhaft hergestellten einzelnen Kugeln hergestellt werden, die lediglich miteinander verbunden werden müssen. Das Verbinden der einzelnen Kugeln zu dem Verbindungselement kann z. B. durch Schweißen erfolgen.
Auf die mindestens drei (Verbindungs-)Abschnitte können Bauteile unmittelbar formschlüssig und/oder reibschlüssig aufgesteckt oder aufgeclipst werden.
Alternativ dazu kann auf einen oder mehrere der vorhandenen Abschnitte des Verbindungselements ein Clipelement formschlüssig und/oder reibschlüssig aufgesteckt oder aufgeclipst werden, das wiederum mit einem der miteinander zu verbindenden Bauteile verbunden ist. In diesem Fall sind die mindestens zwei miteinander zu verbindenden Bauteile also nicht unmittelbar über das Verbindungselement sondern über das Verbindungselement und mindestens ein Clipelement miteinander verbunden.
Gemäß der Erfindung sind zwei der mindestens drei kugelförmigen Abschnitte unmittelbar aneinander gereiht sind bzw. unmittelbar aufeinander folgend, d.h. "in einer Reihe" hintereinander angeordnet sind.
Insbesondere können mehrere Kugeln unmittelbar aneinander gereiht und miteinander verbunden sein, z. B. stoffschlüssig, insbesondere durch Verschweißen.
Alternativ dazu kann ein Verbindungselement auch mehr als drei kugelförmige Abschnitte aufweisen.
Gemäß der Erfindung ist das Verbindungselement in der Art eines "Verbindungsknotens" ausgebildet. Die einzelnen Verbindungsabschnitte des Verbindungselements müssen also nicht alle in einer Linie hintereinander angeordnet sein. Sie können auch in anderer Weise, z. B. sternförmig, kreuzartig oder in anderer Weise angeordnet und zu dem Verbindungselement miteinander miteinander verbunden sein. Gemäß der Erfindung ist vorgesehen, dass mindestens zwei der kugelförmigen Verbindungsabschnitte hintereinander angeordnet sind und dass mindestens ein weiterer kugelförmiger Abschnitt seitlich in Bezug auf die mindestens zwei hintereinander angeordneten kugelförmigen Abschnitte angeordnet ist. Die Erfindung umfasst selbstverständlich nicht nur das oben beschriebene Verbindungselement an sich, sondern auch Bauteilverbindungen, die zwei oder mehr über ein Verbindungselement gemäß der Erfindung miteinander verbundene Bauteile aufweisen.

Wie einleitend bereits erwähnt, kann es sich bei den Bauteilen z. B. um Karosseriebauteile einer Fahrzeugkarosserie handeln. Bei den Karosseriebauteilen muss es sich nicht notwendigerweise um Metallbauteile handeln. Die Erfindung ist vielmehr ganz allgemein zur Verbindung nahezu beliebiger Bauteile geeignet, insbesondere zur Verbindung von Kunststoffbauteilen, faserverstärkten Kunststoffbauteilen (Faserverbundbauteilen) etc.

Im Folgenden wird die Erfindung im Zusammenhang mit der Zeichnung näher erläutert.

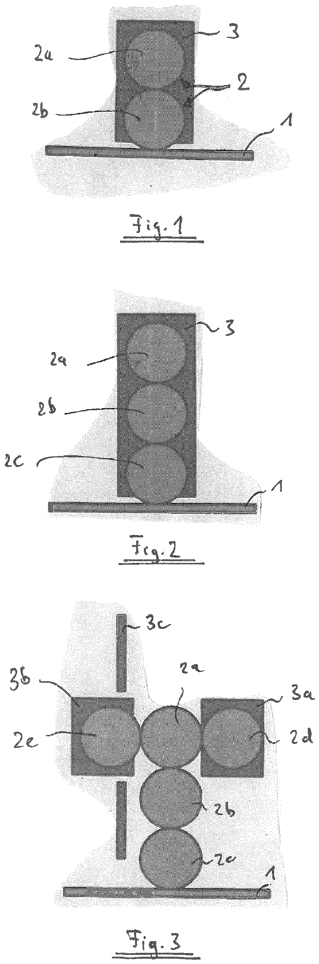

Figur 1 (nicht zur Erfindung gehörend) zeigt ein platinenartiges Bauteil, z. B. ein Karosserieblech 1, das über ein Verbindungselement 2 mit einem (hier nur äußerst schematisch dargestellten) zweiten Bauteil 3 verbunden ist. Das Verbindungselement 2 ist hier durch zwei miteinander verbundene, z. B. miteinander verschweißte Kugeln 2a, 2b gebildet. Der Verbindungsabschnitt 2b ist hier unmittelbar mit dem Bauteil 1 verbunden. Er kann auf das Bauteil 1 aufgeschweißt, aufgeklebt oder in anderer Weise damit verbunden sein.

Die Kugeln 2a, 2b bilden "Verbindungsabschnitte" des Verbindungselements 2. Wie aus Figur 1 ersichtlich ist, sind die Verbindungsabschnitte 2a, 2b unmittelbar miteinander verbunden, d. h. zwischen den Verbindungselementen 2a, 2b braucht kein zusätzliches Bauteil als "Distanzstück" angeordnet sein.

Das zweite Bauteil 3 ist hier als "Clipelement" ausgebildet. Es kann teilweise oder vollständig aus Kunststoff hergestellt sein. Wichtig ist, dass es eine hinreichend große Elastizität aufweisen, so dass es auf die Verbindungsabschnitte 2a, 2b des Verbindungselements 2 aufgeclipst werden kann.

Prinzipiell könnte das zweite Bauteil 3 auch zwei oder mehrteilig ausgeführt sein. In diesem Fall könnten die einzelnen Teile des Bauteils 3 von der Seite her an die Verbindungsabschnitte 2a, 2b angesetzt und zu dem zweiten Bauteil 3 "zusammengesteckt" werden, was den Vorteil hätte, dass das zweite Bauteil 3 eine vergleichsweise geringe Elastizität haben kann.

Figur 2 (nicht zur Erfindung gehörend) zeigt eine Anordnung mit einem Verbindungselement, das drei kugelförmige Verbindungsabschnitte 2a, 2b, 2c aufweist, die in einer Linie hintereinander angeordnet sind. Bei den Verbindungsabschnitten 2a, 2b, 2c handelt es sich um miteinander verschweißte oder in anderer Weise miteinander verbundene Kugeln. Das Clipelement 3 ist hier auf alle drei Verbindungsabschnitte 2a, 2b, 2c aufgeclipst.

Prinzipiell könnte das Verbindungselement mit seinen Verbindungsabschnitten 2a, 2b, 2c auch einstückig hergestellt sein. Im Falle eines Stahlteils könnten die Verbindungsabschnitte 2a, 2b, 2c "aus dem Vollen" gedreht sein. Alternativ dazu könnte das Verbindungselement auch als Spritzgussteil aus Kunststoff hergestellt sein.

Figur 3 zeigt ein Ausführungsbeispiel der Erfindung mit einem Verbindungselement, das fünf Verbindungsabschnitte 2a-2e aufweist. Die drei Verbindungsabschnitte 2a-2c sind, analog zum Ausführungsbeispiel der Figur 2, in einer Linie hintereinander angeordnet, wobei die beiden Verbindungsabschnitte 2a und 2c mit dem Verbindungsabschnitt 2b z. B. stoffschlüssig verbunden sind. Die beiden Verbindungsabschnitte 2c, 2d sind auf einander gegenüberliegenden Seiten des Verbindungsabschnitts 2a mit diesem verbunden. Die Verbindungsabschnitte 2a-2d bilden somit ein T-förmiges Verbindungselement, das die Funktion eines Verbindungsknotens - hat.

Das Verbindungselement 2c kann z. B. auf das Blech 1 aufgeschweißt sein. Auf die Verbindungsabschnitte 2d-2e ist jeweils ein Clipelement 3a, 3b aufgeclipst, wobei das Clipelement 3b in hier nicht näher dargestellter Weise mit einem weiteren Bauteil 3c verbunden ist. Das Clipelement 3b kann z. B. formschlüssig in eine Ausnehmung, die in dem Bauteil 3c vorgesehen ist, eingerastet sein.

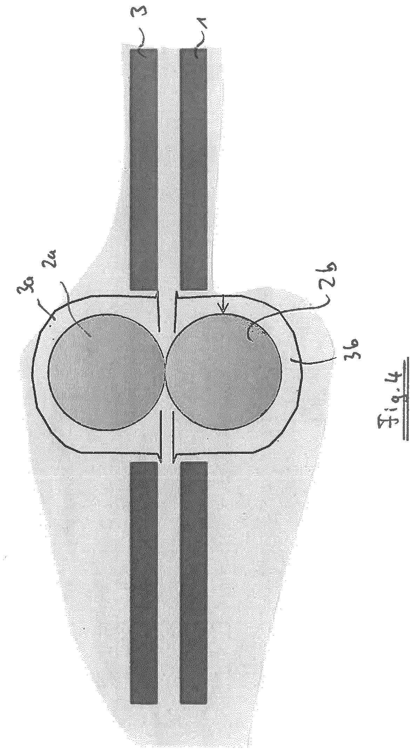

Figur 4 (nicht zur Erfindung gehörend) zeigt ein Verbindungselement in Form einer Doppelkugel. Das Verbindungselement weist zwei jeweils durch eine Kugel gebildete Verbindungsabschnitte 2a, 2b auf, die z. B. miteinander verschweißt sein können. Über den Verbindungsabschnitt 2a ist ein erstes Clipelement 3a und über den Verbindungsabschnitt 2b ein zweites Clipelement 3b geclipst. Die Clipelemente können beispielsweise aus Kunststoff hergestellt sein.

Das durch die beiden Verbindungsabschnitte 2a, 2b gebildete Verbindungselement durchsetzt zwei Bauteile 1, 3. Hierzu ist in den beiden Bauteilen 1, 3 jeweils ein Durchgangsloch vorgesehen. Die Clipelement 3a, 3b hintergreifen jeweils die Ränder der in den beiden Bauteile 1, 3 vorgesehenen Löcher, wodurch die beiden Bauteile 1, 3 zusammengeklemmt werden können. Die beiden Clipelemente 3a, 3b können formschlüssig oder reibschlüssig in die in den beiden Bauteilen 1, 3 vorgesehenen Löcher eingesetzt sein, was in Figur 4 nicht im Einzelnen dargestellt ist.

## Patentansprüche

1. Verbindungselement (1, 2) zum Verbinden mindestens zweier Bauteile (1, 3), wobeidas Verbindungselement (2) mindestens zwei unmittelbar aneinandergereihte und unmittelbar aufeinander folgende, stoffschlüssig miteinander verbundene kugelige oder kugelförmige Abschnitte (2a-2e) aufweist, wobei ein erster der mindestens zwei Abschnitte (2b) zur Verbindung mit einem ersten Bauteil (1) und der zweite der mindestens zwei Abschnitte (2a) zur Verbindung mit einem zweiten Bauteil (3) vorgesehen ist,
**dadurch gekennzeichnet, dass**
• die unmittelbar aneinandergereihten und unmittelbar aufeinander folgenden kugeligen oder kugelförmigen Abschnitte (2a-2e) miteinander verschweißt sind,
• das Verbindungselement (2) mindestens einen kugeligen oder kugelförmigen Abschnitt (2d, 2e) aufweist, der in der Art eines Verbindungsknotens seitlich in Bezug auf die mindestens zwei unmittelbar aneinandergereihten und unmittelbar aufeinander folgenden kugeligen oder kugelförmigen Abschnitte angeordnet ist.

2. Verbindungselement nach Anspruch 1,
**dadurch gekennzeichnet, dass** das Verbindungselement aus Metall, insbesondere aus Stahl, oder aus Kunststoff besteht.

3. Verbindungselement nach einem der Ansprüche 1 oder 2,
**dadurch gekennzeichnet, dass** mindestens einer der Abschnitte (2b, 2c) stoffschlüssig mit dem ihm zugeordneten Bauteil (1) verbunden ist.

4. Verbindungselement nach einem der Ansprüche 1 bis 3,
**dadurch gekennzeichnet, dass** auf mindestens einen der Abschnitte (2a-2e) ein Clipelement (3a, 3b) aufgesteckt oder aufgeclipst ist.

5. Verbindungselement nach Anspruch 4,
**dadurch gekennzeichnet, dass** das Clipelement (3b) mit dem ihm zugeordneten Bauteil (3c) verbunden ist.

6. Verbindungselement nach Anspruch 5,
**dadurch gekennzeichnet, dass** das Clipelement (3b) formschlüssig und/oder reibschlüssig mit dem ihm zugeordneten Bauteil (3c) verbunden ist.

7. Bauteilverbindung bestehend aus mindestens zwei über ein Verbindungselement (2a-2e) nach einem der Ansprüche 1 bis 6 miteinander verbundenen Bauteilen (1, 3, 3a, 3b, 3c).

## Claims

1. A connecting element (1, 2) for connecting at least two components (1, 3), wherein the connecting element (2) has at least two spherical or ball-shaped portions (2a-2e) which are lined up directly adjacently and directly follow each other, which portions are connected together by a material-formed bond, wherein a first one of the at least two portions (2b) is provided for connecting to a first component (1) and the second one of the at least two portions (2a) is provided for connecting to a second component (3), **characterised in that**
• the spherical or ball-shaped portions (2a-2e) which are lined up directly adjacently and directly follow each other are welded together,
• the connecting element (2) has at least one spherical or ball-shaped portion (2d, 2e) which is arranged in the manner of a bend knot laterally relative to the at least two spherical or ball-shaped portions which are lined up directly adjacently and directly follow each other.

2. A connecting element according to Claim 1,
**characterised in that** the connecting element comprises metal, especially of steel, or of plastics material.

3. A connecting element according to one of Claims 1 or 2,
**characterised in that** at least one of the portions (2b, 2c) is connected to the component (1) which is associated therewith by a material-formed bond.

4. A connecting element according to one of Claims 1 to 3,
**characterised in that** a clip element (3a, 3b) is placed or clipped onto at least one of the portions (2a-2e).

5. A connecting element according to Claim 4,
**characterised in that** the clip element (3b) is connected to the component (3c) which is associated therewith.

6. A connecting element according to Claim 5,
**characterised in that** the clip element (3b) is connected to the component (3c) which is associated therewith in a positive fit and/or in a frictional connection.

7. A component connection consisting of at least two components (1, 3, 3a, 3b, 3c) connected together via a connecting element (2a-2e) according to one of Claims 1 to 6.

## Revendications

1. Elément de liaison (1, 2) permettant de relier au moins deux composants (1, 3), cet élément de liaison (2) comprenant au moins deux segments (2a-2e) sphériques ou en forme de billes directement alignés et se suivant directement, reliés entre eux par une liaison par la matière, un premier de ces segments (2b) étant prévu pour permettre la liaison avec un premier composant (1) tandis que le second segment (2a) est prévu pour permettre la liaison avec un second composant (3),
**caractérisé en ce que**
les segments (2a, 2e) sphériques ou en forme de billes directement alignés et se suivant directement, sont soudés l'un à l'autre,
- l'élément de liaison (2) comporte au moins un segment sphérique ou en forme de bille (2d, 2e) qui est installé sous la forme d'un noeud latéralement par rapport aux segments sphériques ou en forme de billes directement aligné et se suivant directement.

2. Elément de liaison conforme à la revendication 1,
**caractérisé en ce qu'**
il est réalisé en métal, en particulier en acier ou en matériau synthétique.

3. Elément de liaison conforme à l'une des revendications 1 et 2,
**caractérisé en ce que**
au moins l'un des segments (2b, 2e) est relié par une liaison par la matière avec le composant (1) qui lui est associé.

4. Elément de liaison conforme à l'une des revendications 1 à 3,
**caractérisé en ce qu'**
un élément d'enclipsage (3a, 3b) est enfiché, ou encliqueté sur au moins l'un des segments (2a, 2e).

5. Elément de liaison conforme à la revendication 4,
**caractérisé en ce que**
l'élément d'enclipsage (3b) est relié au composant (3c) qui lui est associé.

6. Elément de liaison conforme à la revendication 5,
**caractérisé en ce que**
l'élément d'enclipsage (3b) est relié par une liaison par la forme et/ou par une liaison par friction avec le composant (3c) qui lui est associé.

7. Système de liaison de composants constitué par au moins deux composants (1, 3, 3a, 3b, 3c) reliés entre eux par l'intermédiaire d'un élément de liaison (2a, 2e) conforme à l'une des revendications 1 à 6.
